# FASCICULE DE BREVET EUROPEEN

(11) **EP 3 940 318 B1**
(45) Date de publication et mention de la délivrance du brevet: **02.07.2025**
(21) Numéro de dépôt: 21185364.3
(22) Date de dépôt: 13.07.2021
(51) Int. Cl.: F25C 3/04, F25D 17/02, F01D 1/18, F01D 15/10, F03D 9/00

(54) **INSTALLATION DE PRODUCTION DE NEIGE DE CULTURE**
ANLAGE ZUR PRODUKTION VON KUNSTSCHNEE
FACILITY FOR PRODUCING ARTIFICIAL SNOW

(30) Priorité: 15.07.2020 FR 2007392
(43) Date de publication de la demande: 19.01.2022
(73) Titulaire: Technoalpin France, 69570 Dardilly (FR)
(72) Inventeur: DAVID, Eric, 44119 TREILLIERES (FR); VERVOITTE, Maël, 44470 CARQUEFOU (FR); LESAGE, Gaël, 44580 BOURGNEUF EN RETZ (FR); PFEIFER, Markus, 39050 DEUTSCHNOFEN (IT); LANDREAU, Damien, 49450 VILLEUDIEU LA BLOUERE (FR)
(74) Mandataire: Jacobacci Coralis Harle

(56) Documents cités:
- EP-A1- 0 089 590
- WO-A1-92/08936
- DE-A1- 102009 004 738
- IT-A1- VR20 120 184
- JP-A- H04 116 361
- JP-A- S 557 937
- US-A- 4 442 682
- US-A- 5 119 624
- US-A- 5 440 886
- US-A- 5 752 383
- US-A1- 2010 045 233
- US-A1- 2010 060 002
- US-A1- 2011 266 702
- US-A1- 2014 137 563
- US-B1- 6 231 313
- US-B2- 9 334 758

## Description

### Domaine technique de l'invention

La présente invention concerne de manière générale la fabrication de neige de culture (encore appelée neige artificielle).

Elle concerne en particulier une installation de production de neige de culture comprenant un dispositif enneigeur, une canalisation fluidique d'eau pour l'alimentation en eau dudit dispositif enneigeur, éventuellement une canalisation fluidique d'air pour l'alimentation en air dudit dispositif enneigeur, des moyens de commande pour la gestion du fonctionnement dudit dispositif enneigeur, et une alimentation électrique pour l'alimentation en électricité desdits moyens de commande.

### Etat de la technique

Les pistes de ski sont aménagées pour accueillir notamment de la neige naturelle, par exemple pour la pratique du ski alpin ou du ski de fond.

De manière générale, il est connu de fabriquer de la neige de culture pour la disposer sur les pistes de ski afin de pallier des défauts de présence de neige naturelle.

Il est alors connu d'installer, sur au moins une partie des bords des pistes de ski, des dispositifs enneigeurs (encore appelés « producteurs de neige » ou « canons à neige ») alimentés par des canalisations d'eau sous pression et éventuellement des canalisations d'air sous pression pour permettre la production de cette neige de culture.

Ces dispositifs enneigeurs peuvent être de type basse pression (ou « ventilateur »), ou encore de type haute pression (ou « lance »).

La production de neige de culture nécessite donc de l'eau et parfois de l'air. La qualité (sèche, normale, humide) de la neige produite est fonction du volume d'eau (et éventuellement d'air) projeté dans l'environnement extérieur qui se transforme en neige par congélation naturelle.

Cette quantité d'eau et éventuellement d'air est contrôlée et gérée par des systèmes appelés « distributeurs d'eau », « distributeurs d'air » ou « distributeur d'eau et d'air », qui alimentent en eau et éventuellement en air des buses de production de neige installées sur la tête des dispositifs enneigeurs.

Ces distributeurs peuvent être réalisés à partir de vannes de régulation automatique, de vanne tout ou rien, de vannes manuelles... ou tout autre système permettant d'ajuster un volume d'eau et éventuellement un volume d'air.

Pour faire fonctionner un dispositif enneigeur il est donc nécessaire de disposer d'eau et éventuellement d'air, mais aussi d'une source d'énergie permettant de contrôler et gérer ces « distributeurs d'eau et/ou d'air ».

Dans la majeure partie des cas, cette énergie est de type électrique et provient d'un réseau d'alimentation électrique via des câbles adaptés.

Cette énergie électrique sert principalement à alimenter l'électronique, les capteurs, les actionneurs, les moteurs ou servo-moteurs, ainsi que le chauffage des dispositifs enneigeurs.

Cependant, dans certains cas, il n'est pas possible de distribuer un réseau électrique au niveau de chaque dispositif enneigeur.

Les dispositifs enneigeurs non raccordés au réseau doivent alors être autonomes en énergie électrique, cette énergie électrique étant produite par des systèmes de batteries, des panneaux solaires (utilisation de l'énergie solaire) ou encore des éoliennes (utilisation de l'énergie du vent).

Mais les moyens autonomes de production d'électricité connus à ce jour sont relativement complexes et nécessitent une maintenance régulière.

Les systèmes de batteries ont des performances réduites dans une ambiance froide et ils nécessitent une maintenance (recharge, remplacement...). Les panneaux solaires doivent être chauffés pour éviter d'être recouverts de neige et rendus de ce fait non opérationnels.

On connait des documents US-5 440 886 et US-6 231 313 des installations pour produire de la neige artificielle à partir d'eau et d'air comprimé, et qui comprennent une génératrice d'électricité placée sur la canalisation d'alimentation en air.

Le courant produit par la génératrice d'électricité peut servir pour alimenter des moyens de gestion de l'installation.

Cependant le circuit d'air peut comporter de l'eau susceptible de nuire au fonctionnement de la génératrice d'électricité.

### Présentation de l'invention

Afin de remédier aux l'inconvénients précités de l'état de la technique, la présente invention propose une installation de production de neige de culture selon la revendication 1.

Une telle structure d'installation présente l'avantage d'utiliser l'énergie des ressources nécessaires à la production de neige, pour assurer le fonctionnement de l'enneigeur. Elle ne nécessite aucun recours à une autre source d'énergie. Le système est uniquement mécanique et il ne nécessite pas de maintenance, de recharge ou de nettoyage, comme les solutions connues à base de panneaux solaires ou de batteries.

D'autre part elle est sécurisée en fonctionnement par la présence des systèmes de purge des condensats.

D'autres caractéristiques non limitatives et avantageuses de l'installation de production de neige de culture conforme à l'invention, prises individuellement ou selon toutes les combinaisons techniquement possibles, sont les suivantes :
- l'axe de la turbine de la génératrice d'électricité est en prise avec un alternateur pour la production d'électricité, lequel alternateur est relié à des moyens de stockage de l'énergie électrique produite, du type batterie(s) ou super-capacité(s) ;
- l'installation comprend un dispositif régulateur adapté pour réguler l'énergie électrique produite ;
- les moyens de commande pour la gestion du fonctionnement du dispositif enneigeur comprennent au moins un capteur de paramètre(s) choisi(s) parmi les capteurs de vitesse du vent, de pression d'eau, de pression d'air, de température ambiante et d'hygrométrie ambiante, lequel au moins un capteur de paramètre(s) est alimenté par de l'énergie électrique produite par la génératrice d'électricité ;
- la génératrice d'électricité comprend une entrée de fluide pour le fluide d'entrainement de la turbine, au moins une sortie de fluide pour le fluide d'entrainement de ladite turbine, un canal de transport dudit fluide reliant ladite entrée de fluide et ladite au moins une sortie de fluide, au sein d'un tronçon duquel canal de transport est disposé un secteur de ladite turbine, pour permettre son entrainement en rotation, lequel canal de transport comprend un moyen de restriction de passage pour ledit fluide, ménagé en amont de ladite turbine, pour augmenter la vitesse dudit fluide dans ledit canal de transport ;
- la génératrice d'électricité comprend une entrée de fluide pour le fluide d'entrainement de ladite turbine, au moins une sortie de fluide pour le fluide d'entrainement de ladite turbine, un canal de transport dudit fluide reliant ladite entrée de fluide et ladite au moins une sortie de fluide, au sein d'un tronçon duquel canal de transport est disposé un secteur de ladite turbine, pour permettre son entrainement en rotation, lequel canal de transport comprend un moyen de restriction de passage pour ledit fluide, ménagé en aval de ladite turbine, pour limiter la vitesse du fluide dans le canal de transport de fluide de la génératrice d'électricité ;
- la génératrice d'électricité comprend une entrée de fluide pour le fluide d'entrainement de ladite turbine, au moins une sortie de fluide pour le fluide d'entrainement de ladite turbine, un canal de transport dudit fluide reliant ladite entrée de fluide et ladite au moins une sortie de fluide, au sein d'un tronçon duquel canal de transport est disposé un secteur de ladite turbine, pour permettre son entrainement en rotation, et l'installation comprend en outre une canalisation « by-pass » qui raccorde ladite entrée de fluide et ladite au moins une sortie de fluide, laquelle canalisation « by-pass » permet le passage d'une partie dudit fluide pour l'alimentation dudit dispositif enneigeur sans transiter par ladite génératrice d'électricité ;
- la génératrice d'électricité comprend une entrée pour le fluide d'entrainement de ladite turbine, deux sorties pour le fluide d'entrainement de ladite turbine, un canal de transport dudit fluide reliant ladite entrée de fluide et lesdites deux sorties de fluide, une première desdites sorties de fluide étant ménagée de sorte qu'un premier secteur de ladite turbine soit disposé au sein d'un tronçon dudit canal de transport, et une seconde desdites sorties de fluide étant ménagée de sorte qu'un second secteur de ladite turbine soit disposé au sein d'un tronçon dudit canal de transport, lesquels premier secteur de turbine et second secteur de turbine s'étendent sur des secteurs angulaires de valeurs différentes pour disposer d'un choix de raccordement notamment en fonction des caractéristiques de pression et de débit du fluide en amont de ladite génératrice d'électricité, l'installation comprenant encore un moyen d'obturation adapté pour obturer ladite première sortie de fluide, ou ladite seconde sortie de fluide, non utilisée pour le raccordement.

Bien entendu, les différentes caractéristiques, variantes et formes de réalisation de l'invention peuvent être associées les unes avec les autres sel0on diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique générale illustrant un premier mode de réalisation d'une installation de production de neige de culture selon l'invention, comprenant une génératrice d'électricité disposée sur la canalisation fluidique d'air qui alimente le dispositif enneigeur ;
[Fig. 2] est une vue schématique générale illustrant un deuxième mode de réalisation d'une installation de production de neige de culture selon un exemple qui ne fait pas partie de l'invention, comprenant une génératrice d'électricité disposée sur la canalisation fluidique d'eau qui alimente le dispositif enneigeur ;
[Fig. 3] est une vue schématique isolée de la génératrice d'électricité des installations de production de neige de culture illustrées sur les figures 1 et 2, vue en coupe longitudinale au niveau de sa turbine ;
[Fig. 4] est une vue schématique en coupe transversale de la génératrice d'électricité, selon le plan de coupe 4-4 de la figure 3.

Il est à noter que, sur ces figures, les éléments structurels et/ou fonctionnels communs aux différentes variantes peuvent présenter les mêmes références.

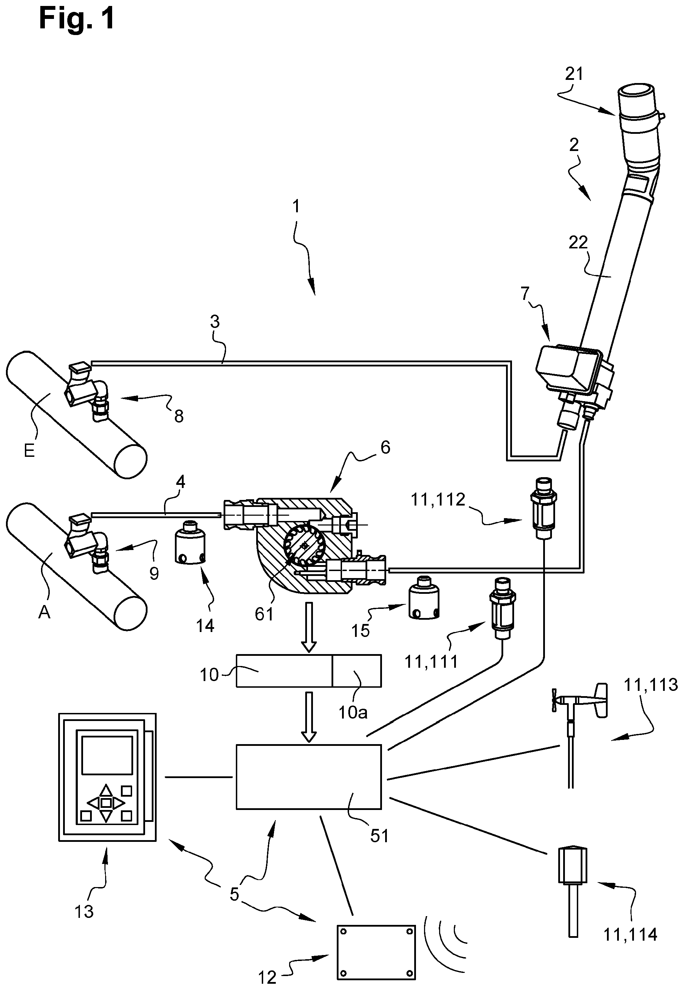

La figure 1 illustre une installation 1 de production de neige de culture conforme à l'invention comprenant :
- un dispositif enneigeur 2,
- une canalisation fluidique d'eau 3 (eau sous pression) pour l'alimentation en eau du dispositif enneigeur 2,
- une canalisation fluidique d'air 4 (air comprimé) pour l'alimentation en air du dispositif enneigeur 2,
- des moyens de commande 5 pour la gestion du fonctionnement du dispositif enneigeur 2,
- une génératrice d'électricité 6 pour la production d'électricité et l'alimentation en électricité des moyens de commande 5 ; cette génératrice d'électricité 6 est ici disposée sur la canalisation fluidique d'air 4, et elle comprend une turbine 61 à pales apte à être entrainée par le fluide air de ladite canalisation fluidique d'air 4.

Le dispositif enneigeur 2 peut être de tout type, en particulier du type basse ou haute pression.

Dans le mode de réalisation illustré le dispositif enneigeur 2 est du type haute pression à mélange air/eau externe, muni de buses de pulvérisation d'eau et d'au moins une buse de production d'agents de nucléation.

La tête 21 de production de neige du dispositif enneigeur 2 est montée à l'extrémité d'une perche 22 qui peut atteindre plusieurs mètres de hauteur.

Un boitier 7 renfermant les moyens de commande 5 est monté à la base de la perche 22. Le boitier 7 renferme en particulier un ou plusieurs distributeurs actionné(s) par des moteurs (système à pistons) ou par des électrovannes pour réaliser la régulation de l'enneigeur.

La canalisation fluidique d'eau 3 est raccordée à une canalisation principale d'eau E qui longe la piste de ski de préférence pour alimenter plusieurs dispositifs enneigeurs. Une vanne 8 manuelle (dite vanne d'eau 8) permet à un opérateur d'alimenter la canalisation fluidique d'eau 3 à partir de la canalisation principale d'eau E, ou de stopper cette alimentation. La pression de l'eau dans la canalisation fluidique d'eau 3 peut être comprise entre 3 bar et 100 bar ; et le débit d'eau peut être compris entre 0.1 m³/h et 50 m³/h.

D'une manière similaire, la canalisation fluidique d'air 4 est raccordée à une canalisation principale d'air A qui longe la piste de ski pour alimenter plusieurs dispositifs enneigeurs. Une vanne 9 manuelle (dite vanne d'air 9) permet à un opérateur d'alimenter la canalisation fluidique d'air 4 à partir de la canalisation principale d'air A, ou de stopper cette alimentation. La pression de l'air dans la canalisation fluidique d'air 4 peut être comprise entre 1 bar et 10 bar ; et le débit d'air peut être compris entre 5 Nm³/h et 500 Nm³/h. Le principe de fonctionnement de la génératrice d'électricité 6 est de transformer l'énergie cinétique/mécanique de l'air en énergie électrique.

En l'occurrence, l'air comprimé circule autour des pales de la turbine 61 générant son mouvement de rotation.

La turbine 61 est entraînée en rotation par le flux d'air. Cette rotation entraîne (via un arbre) un alternateur qui permet de produire au moins une partie de l'énergie électrique nécessaire au bon fonctionnement du dispositif enneigeur 2.

La turbine 61 entraîne elle-même l'alternateur associé qui convertit l'énergie de l'air comprimé en énergie électrique ; et cette énergie électrique est régulée dans un dispositif régulateur 10, puis stockée dans des moyens de stockage d'énergie 10a.

Les moyens de stockage d'énergie 10a de l'énergie électrique produite peuvent consister en des batteries conventionnelles ou des super-capacités.

Ces moyens de stockage d'énergie 10a sont chargés en parallèle pour que l'alimentation électrique commence dès que la turbine 61 est en mouvement. De préférence ils ont la capacité de restituer temporairement une énergie électrique plus importante que celle délivrée par la turbine, ce qui permet par exemple de piloter un actionneur de plus forte puissance.

En pratique le dispositif régulateur 10 consiste en une carte de régulation intégrant éventuellement les moyens de stockage d'énergie 10a. cette carte de régulation peut être intégrée dans un boitier associé à la génératrice d'électricité.

Cette énergie électrique permet d'alimenter les moyens de commande 5 nécessaires à la gestion du fonctionnement du dispositif enneigeur 2.

Ces moyens de commande 5 comprennent ici un automate 51 de contrôle/commande qui assure la distribution de l'alimentation électrique, un ensemble de capteurs 11, un ensemble d'actionneurs (non représentés), un modem radio ou système de communication 12 avec une supervision externe (ordinateur, application mobile...), un afficheur-interface homme/machine 13.
L'ensemble de capteurs 11 peut comprendre :
- un capteur de pression d'air 111,
- un capteur de pression d'eau 112,
- un anémomètre 113,
- une sonde de température d'air ambiant et d'hygrométrie 114.

La vanne d'eau 8 et la vanne d'air 9 peuvent être équipées d'actionneurs et pilotées par l'électricité produite.
Dans ce cas il est ainsi possible d'adapter le débit du dispositif enneigeur 2 à la température ambiante, et de l'arrêter en cas d'urgence ou si cette température ambiante ne permet plus la production de neige.

L'air comprimé en sortie de la turbine 61 alimente le circuit d'air du dispositif enneigeur 2. Deux systèmes de purge des condensats 14 et 15 placés l'un en amont et l'autre en aval de la génératrice d'électricité 6, sont adaptés pour limiter l'accumulation d'eau dans ladite génératrice d'électricité 6 et plus particulièrement dans la turbine 61. Ces systèmes de purge des condensats 14 et 15 peuvent être de type manuel (vanne manuelle), ou automatique (pop drain à ressort).

Le circuit d'eau 3 est raccordé directement au circuit d'eau du dispositif enneigeur 2.

L'automate de contrôle/commande 51 asservit les débits d'eau et d'air du dispositif enneigeur 2 grâce à des actionneurs pilotant, par exemple, des buses à géométries variables, des vannes ou des distributeurs en fonction de certains au moins des paramètres physiques suivants :
- pression d'air détectée par le capteur 111,
- pression d'eau détectée par le capteur 112,
- vitesse et direction du vent détectés par le capteur 113,
- température et hygrométrie de l'air ambiant détectées par le capteur 114.

L'interface homme/machine 13 peut être optionnelle et est réalisée par un afficheur associé à une liaison de communication de type sans fil ou filaire vers une supervision (ordinateur, application mobile, application WEB...).

### Modes opératoires :

Une telle installation peut être mise en œuvre de trois manières : mode automatique, auto-régulant et manuel.

### 1 - Mode automatique :

L'énergie stockée dans les batteries ou les super-capacités est suffisante pour alimenter les capteurs 11 et permettre l'ouverture de la vanne d'air 9.
Dans ce cas, si la température ambiante est inférieure à un seuil programmé, l'automate 51 demande l'ouverture de la vanne d'air 9.

La génératrice d'électricité 6 génère alors de l'électricité qui permet d'ouvrir la vanne d'eau 8 et de réguler le débit du dispositif enneigeur 2 en pilotant les actionneurs nécessaires à positionner les buses, vannes ou distributeurs.

Quand la température ambiante devient plus haute que le seuil programmé précité, l'automate 51 referme la vanne d'eau 8 puis la vanne d'air 9 et le système passe en mode veille, surveillant la température de l'air ambiant et le niveau de charge des batteries.

Des messages peuvent être envoyés informant un moyen informatique distant de l'état du système (mesures des capteurs, débits estimés, niveau de charge des moyens de stockage d'énergie).

Des messages d'alarme peuvent être générés pour signaler des situations anormales ou extrêmes comme le niveau de charge des batteries trop bas pour autoriser un redémarrage automatique.

En option, si le niveau des batteries devient trop bas, l'utilisateur peut autoriser une ouverture automatique de la vanne d'air 9 dans le seul but de recharger les batteries si le réseau est en charge d'air.

### 2 - Mode auto-régulant :

Si l'énergie stockée est insuffisante ou si la vanne d'air 9 n'est pas équipée d'un d'actionneur, l'utilisateur ouvre manuellement la vanne d'air 9 lorsqu'il décide de faire fonctionner le dispositif enneigeur 2.

La génératrice d'électricité 6 génère alors de l'électricité qui permet d'ouvrir la vanne d'eau 8 et de réguler le débit du dispositif enneigeur 2 en pilotant les actionneurs nécessaires à positionner les buses, vannes ou distributeurs.

En variante, si la vanne d'eau 8 n'est pas équipée d'un actionneur, l'utilisateur ouvre manuellement cette vanne d'eau 8.

Dans les deux cas, quand la température ambiante est supérieure au seuil choisi, un message est envoyé à l'utilisateur et le dispositif enneigeur 2 se positionne sur son débit d'eau minimum.

### 3 - Mode manuel :

Dans ce mode manuel, l'utilisateur contrôle manuellement le dispositif enneigeur soit via le panneau opérateur de l'automate 51, soit par des commutateurs.

L'opérateur ouvre la vanne d'air 9, soit par l'automate 51, soit manuellement si le niveau de charge des batteries ne le permet pas.

La génératrice d'électricité génère alors l'électricité nécessaire au fonctionnement du système et à la recharge éventuelle des batteries.

En option, l'automate 51 et tout ou partie des organes peuvent être alimentés par une source extérieure comme une batterie d'appareil électroportatif chargé au préalable.

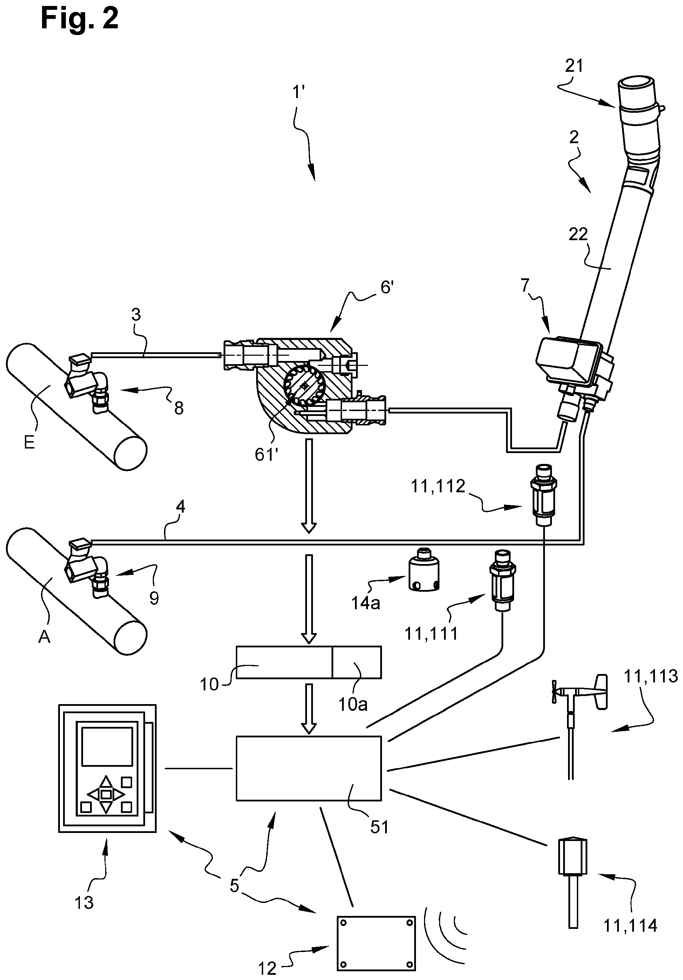

La figure 2 illustre un deuxième mode de réalisation d'une installation 1' de production de neige de culture selon un exemple qui ne fait pas partie de l'invention.

L'installation 1' correspondante comprend essentiellement les mêmes composants/dispositifs que celle décrite ci-dessus en relation avec la figure 1, mais ici, la génératrice d'électricité 6' est disposée sur la canalisation fluidique d'eau 3.

Cette installation 1' pour la production de neige de culture comprend donc :
- un dispositif enneigeur 2,
- une canalisation fluidique d'eau 3 (eau sous pression) pour l'alimentation en eau du dispositif enneigeur 2,
- une canalisation fluidique d'air 4 (air comprimé) pour l'alimentation en air du dispositif enneigeur 2,
- des moyens de commande 5 pour la gestion du fonctionnement du dispositif enneigeur 2,
- une génératrice d'électricité 6' pour la production d'électricité et l'alimentation en électricité des moyens de commande 5, cette génératrice d'électricité 6' étant ici disposée sur la canalisation fluidique d'eau 3, et comprenant une turbine 61' à pales apte à être entrainée par le fluide eau de ladite canalisation fluidique d'eau 3.

Le dispositif enneigeur 2 peut être de tout type, en particulier de type basse ou haute pression.

Dans le mode de réalisation illustré le dispositif enneigeur 2 est du type haute pression à mélange air/eau externe, muni de buses de pulvérisation d'eau et d'au moins une buse de production d'agents de nucléation.

La tête 21 de production de neige du dispositif enneigeur 2 est montée à l'extrémité d'une perche 22 qui peut atteindre plusieurs mètres de hauteur.

Un boitier 7 renfermant les moyens de commande 5 est monté à la base de la perche 22. Le boitier 7 renferme en particulier un ou plusieurs distributeurs actionné(s) par des moteurs (système à pistons) ou par des électrovannes pour réaliser la régulation de l'enneigeur.

La canalisation fluidique d'eau 3 est raccordée à une canalisation principale d'eau E qui longe la piste de ski de préférence pour alimenter plusieurs dispositifs enneigeurs. Une vanne 8 manuelle (dite vanne d'eau 8) permet à un opérateur d'alimenter la canalisation fluidique d'eau 3 à partir de la canalisation principale d'eau E, ou de stopper cette alimentation. La pression de l'eau dans la canalisation fluidique d'eau 3 peut être comprise entre 3 bar et 100 bar ; et le débit d'eau peut être compris entre 0.1 m³/h et 50 m³/h.

D'une manière similaire, la canalisation fluidique d'air 4 est raccordée à une canalisation principale d'air A qui longe la piste de ski pour alimenter plusieurs dispositifs enneigeurs. Une vanne 9 manuelle (dite vanne d'air 9) permet à un opérateur d'alimenter la canalisation fluidique d'air 4 à partir de la canalisation principale d'air A, ou de stopper cette alimentation. La pression de l'air dans la canalisation fluidique d'air 4 peut être comprise entre 1 bar et 10 bar ; et le débit d'air peut être compris entre 5 Nm³/h et 500 Nm³/h.

Le principe de fonctionnement de la génératrice d'électricité 6' est de transformer l'énergie cinétique/mécanique de l'eau en énergie électrique.

La turbine 61' est entraînée en rotation par le flux d'eau. Cette rotation entraîne (via un arbre) un alternateur qui permet de produire au moins une partie de l'énergie électrique nécessaire au bon fonctionnement du dispositif enneigeur 2.

En l'occurrence, l'eau sous pression circule autour des pales de la turbine 61' générant son mouvement de rotation.

La turbine 61' entraîne elle-même l'alternateur associé qui convertit l'énergie de l'eau sous pression en énergie électrique ; et cette énergie électrique est régulée dans un dispositif régulateur 10, puis stockée dans des moyens de stockage d'énergie 10a.

Les moyens de stockage d'énergie 10a peuvent consister en des batteries conventionnelles ou des super-capacités.

Ces moyens de stockage d'énergie 10a sont chargés en parallèle pour que l'alimentation électrique commence dès que la turbine 61' est en mouvement. De préférence ils ont la capacité de restituer temporairement une énergie électrique plus importante que celle délivrée par la turbine, ce qui permet par exemple de piloter un actionneur de plus forte puissance

En pratique le dispositif régulateur 10 consiste en une carte de régulation intégrant éventuellement les moyens de stockage d'énergie 10a. cette carte de régulation peut être intégrée dans un boitier associé à la génératrice d'électricité.

Cette énergie électrique permet d'alimenter les moyens de commande 5 nécessaires à la gestion du fonctionnement du dispositif enneigeur 2.

Ces moyens de commande 5 comprennent ici un automate 51 de contrôle/commande, qui assure la distribution de l'alimentation électrique, un ensemble de capteurs 11, un ensemble d'actionneurs (non représentés), un modem radio ou système de communication 12 avec une supervision externe (ordinateur, application mobile...), un afficheur-interface homme/machine 13.

L'ensemble de capteurs 11 peut comprendre :
- un capteur de pression d'air 111,
- un capteur de pression d'eau 112,
- un anémomètre 113,
- une sonde de température d'air ambiant et d'hygrométrie 114.

La vanne d'eau 8 et la vanne d'air 9 peuvent être équipées d'actionneurs et pilotées par l'électricité produite.

Il est ainsi possible d'adapter le débit du dispositif enneigeur 2 à la température ambiante, et de l'arrêter en cas d'urgence ou si cette température ambiante ne permet plus la production de neige.

L'eau en sortie de la turbine 61' alimente le circuit d'eau du dispositif enneigeur 2. Un système de purge des condensats 14a est placé sur la canalisation fluidique d'air 4 pour limiter l'accumulation d'eau dans le dispositif enneigeur 2. Ce système de purge des condensats 14a peut être de type manuel (vanne manuelle), ou automatique (pop drain à ressort).

Le circuit d'air comprimé 4 est raccordé directement au circuit d'air du dispositif enneigeur 2.

L'automate de contrôle/commande 51 asservit les débits d'eau et d'air du dispositif enneigeur 2 grâce à des actionneurs pilotant, par exemple, des buses à géométries variables, des vannes ou des distributeurs en fonction de certains au moins des paramètres physiques suivants :
- pression d'air détectée par le capteur 111,
- pression d'eau détectée par le capteur 112,
- vitesse et direction du vent détectés par le capteur 113,
- température et hygrométrie de l'air ambiant détectées par le capteur 114.

L'interface homme/machine 13 peut être optionnelle et est réalisée par un afficheur associé à une liaison de communication de type sans fil ou filaire vers une supervision (ordinateur, application mobile, application WEB...).

### Modes opératoires

Les modes opératoires de cette installation 1' de production de neige de culture sont similaires à ceux décrits ci-dessus en relation avec l'installation 1 de la figure 1, avec les différences suivantes :

### 1 - Mode automatique :

L'énergie stockée dans les batteries ou les super-capacités est suffisante pour alimenter les capteurs 11 et permettre l'ouverture de la vanne d'air 9 et de la vanne d'eau 8.
Dans ce cas, si la température ambiante est inférieure à un seuil programmé, l'automate 51 demande l'ouverture de la vanne d'air 9 puis de la vanne d'eau 8.

La génératrice d'électricité 6' génère alors de l'électricité qui permet de réguler le débit du dispositif enneigeur 2 en pilotant les actionneurs nécessaires à positionner les buses, vannes ou distributeurs.

Si le niveau des batteries devient trop bas, il n'est pas possible de les recharger car cela impliquerait une tentative production de neige hors température.

### 2 - Mode auto-régulant :

Si l'énergie stockée est insuffisante ou si les vannes d'air 9 et d'eau 8 ne sont pas équipées d'un d'actionneur, l'utilisateur ouvre manuellement la vanne d'air 9 lorsqu'il décide de faire fonctionner le dispositif enneigeur, puis la vanne d'eau 8.

La génératrice d'électricité 6' génère alors de l'électricité qui permet de réguler le débit du dispositif enneigeur 2 en pilotant les actionneurs nécessaires à positionner les buses, vannes ou distributeurs.

### 3 - Mode manuel :

Dans ce mode manuel, l'utilisateur contrôle manuellement le dispositif enneigeur 2, soit via l'automate 51, soit par des commutateurs.
L'opérateur ouvre la vanne d'air 9, soit par l'automate 51, soit manuellement si le niveau de charge des batteries ne le permet pas, puis la vanne d'eau 8.

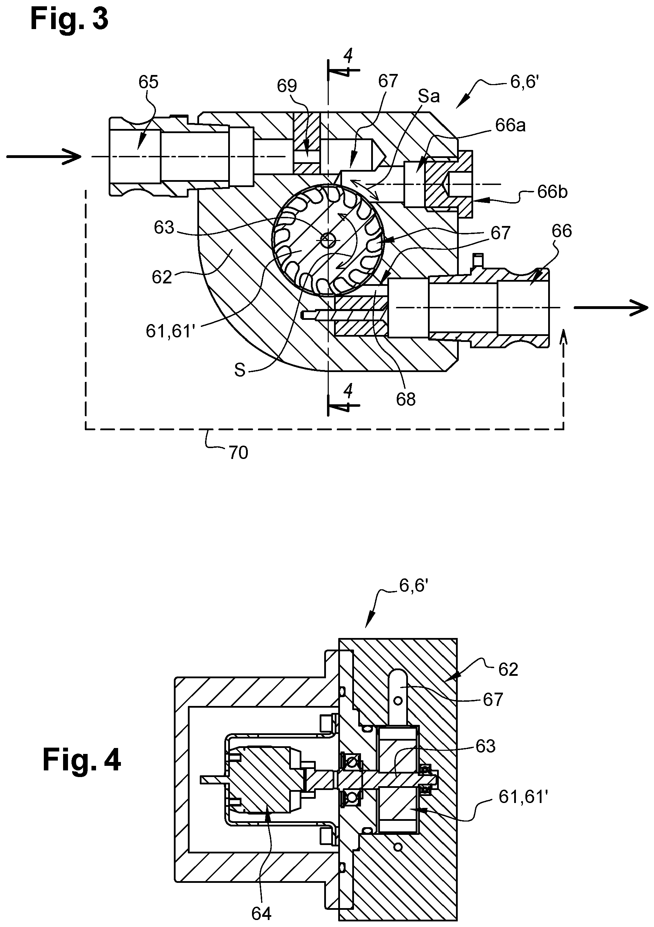

Les figures 3 et 4 détaillent la structure d'une génératrice d'électricité 6, 6' apte à équiper les installations 1, 1' de production de neige de culture des figures 1 et 2.

Cette génératrice d'électricité 6, 6' comprend une turbine 61, 61' du type à pales, logée dans un corps de génératrice 62.

L'axe ou l'arbre 63 de la turbine 61, 61' est en prise avec un alternateur 64 pour la production d'électricité. Cet alternateur 64 est destiné à être relié au dispositif régulateur 10 et aux batteries ou super-capacités des moyens de stockage 10a de l'énergie électrique produite.

Comme on peut le voir sur la figure 3, la génératrice d'électricité 6, 6' comprend une entrée de fluide 65 pour le fluide d'entrainement (air ou eau selon le cas) de la turbine 61, 61', ainsi qu'une sortie de fluide 66, avec, entre les deux, un canal de transport de fluide 67. Le canal de transport de fluide 67 relie l'entrée de fluide 65 et la sortie de fluide 66 ; et un secteur S de la turbine 61, 61' est disposé au sein d'un tronçon du canal de transport 67 pour permettre son entrainement en rotation. Ici, le secteur S de la turbine qui est disposé dans le canal de transport de fluide 67 est de l'ordre de 180°.

En fonction des caractéristiques de l'installation de production de neige, le débit ou la vitesse du fluide peuvent être adaptés par au moins une restriction de section, en particulier pour assurer la rotation de la turbine 61, 61' à une vitesse optimale.

Ainsi, un tel moyen 68 de restriction de passage pour le fluide peut être prévu en aval de la turbine 61, 61' (c'est-à-dire en sortie de turbine), cela pour limiter la vitesse du fluide dans le canal de transport de fluide 67. Une telle restriction de passage 68 peut s'avérer particulièrement intéressante sur l'air, pour limiter la vitesse si la turbine est utilisée seule sans enneigeur.

De même, en entrée (c'est-à-dire en amont de la turbine 61, 61'), selon les besoins, un moyen 69 de restriction de passage peut être utilement placé pour augmenter la vitesse du fluide et amener le flux de fluide à une vitesse périphérique suffisante pour faire tourner la turbine 61, 61' (on augmente la vitesse en créant une perte de charge afin de garantir une vitesse de rotation minimum à faible pression).

La turbine 61, 61' de la génératrice d'électricité 6, 6' peut être associée à un seul de ces moyens 68, 69 de restriction de passage, ou à ces deux moyens 68, 69 de restriction de passage amont et aval.

Les moyens de restriction de passage 68 et 69 consistent de préférence chacun en une pièce démontable, pour permettre son enlèvement ou son remplacement afin d'ajuster à volonté les débits et vitesses recherchés. Un tel ajustement peut être obtenu par un diamètre particulier d'orifice, une forme particulière d'orifice ou encore un nombre particulier d'orifices.

Comme illustré schématiquement sur la figure 3, l'installation de production de neige peut comprendre une canalisation « by-pass » 70 qui raccorde l'entrée de fluide 65 et la sortie de fluide 66. On comprend qu'une telle canalisation « by-pass » 70 permet le passage d'une partie du fluide (eau ou air selon le cas) pour alimenter le dispositif enneigeur 2 sans transiter par la génératrice d'électricité 6, 6'. Cela permet de n'utiliser qu'une partie de l'énergie du fluide pour la turbine, en cas de source d'énergie importante, afin de ne pas être obligé de surdimensionner les composants de la turbine.

Toujours sur la figure 3, on remarque que la génératrice d'électricité 6, 6' peut comprendre une sortie supplémentaire 66a pour le fluide d'entrainement de la turbine 61, 61'.

De la sorte :
- une première sortie 66 pour le fluide est ménagée de sorte qu'un premier secteur S de la turbine 61, 61' soit disposé au sein d'un tronçon du canal de transport 67, et
- une seconde sortie 66a pour ledit fluide est ménagée de sorte qu'un second secteur Sa de la turbine 61, 61', différent de S, soit disposé au sein d'un tronçon dudit canal de transport de fluide 67.

Ainsi, l'utilisateur dispose d'un choix de raccordement du dispositif enneigeur 2 sur les sorties 66 ou 66a de la génératrice d'électricité 6, 6', notamment en fonction des caractéristiques de pression et de débit du fluide en amont de ladite génératrice d'électricité 6, 6'.

Un moyen d'obturation en forme de bouchon 66b est prévu pour obturer la première sortie 66 ou la seconde sortie 66a non utilisée pour le raccordement.

D'une manière similaire, plus de deux sorties pour le fluide d'entrainement de la turbine 61, 61' peuvent être envisagées pour augmenter le choix de raccordement en fonction des caractéristiques de pression et de débit du fluide en amont de la génératrice d'électricité 6, 6'.

Selon le cas, la génératrice d'électricité 6, 6' est adaptée pour que sa turbine 61, 61' résiste à la pression d'air ou d'eau de fonctionnement. Son rendement énergétique doit être intéressant et elle doit de préférence minimiser l'énergie prélevée sur le flux d'air ou d'eau sous peine d'entrainer une dégradation significative des performances du dispositif enneigeur 2.

Cette génératrice d'électricité 6, 6' est également de préférence adaptée pour minimiser l'échauffement du flux d'eau ou d'air. En effet, la transformation d'énergie cinétique/mécanique en énergie électrique entraîne un échauffement du flux d'eau ou d'air lié au frottement de l'eau ou de l'air sur les pales de la turbine 61, 61'. La température d'eau ou d'air est un paramètre important pour les performances du dispositif enneigeur 2, et une température d'eau ou d'air trop importante entrainerait une dégradation significative des performances du dispositif enneigeur 2.

L'installation de production de neige est également avantageusement équipée de tout dispositif(s) nécessaire(s) à la protection des personnes.

Selon une variante de réalisation, si les besoins en énergie le nécessitent, l'installation de production de neige de culture peut comprendre une génératrice d'électricité disposée sur la canalisation fluidique d'eau 3, et une génératrice d'électricité disposée sur la canalisation fluidique d'air.

## Revendications

1. Installation (1) de production de neige de culture comprenant - un dispositif enneigeur (2), - une canalisation fluidique d'eau (3) pour l'alimentation en eau dudit dispositif enneigeur (2), - une canalisation fluidique d'air (4) pour l'alimentation en air dudit dispositif enneigeur (2), - des moyens de commande (5) pour la gestion du fonctionnement dudit dispositif enneigeur (2), une - alimentation électrique pour l'alimentation en électricité desdits moyens de commande (5),
ladite alimentation électrique comprenant une génératrice d'électricité (6) disposée sur ladite canalisation fluidique d'air (4),
laquelle génératrice d'électricité (6) comprend une turbine (61) apte à être entrainée par l'air de ladite canalisation fluidique d'air (4),
**caractérisée en ce qu'**elle comprend deux systèmes de purge des condensats (14, 15) placés l'un (14) en amont et l'autre (15) en aval de ladite génératrice d'électricité (6), adaptés pour limiter l'accumulation d'eau dans ladite génératrice d'électricité (6).

2. Installation (1) de production de neige de culture selon la revendication 1, **caractérisée en ce qu'**elle comprend un alternateur qui est en prise avec l'axe de ladite turbine pour la production d'électricité, et des moyens de stockage de l'énergie électrique produite, du type batterie(s) ou super capacité(s) reliés audit alternateur.

3. Installation (1) de production de neige de culture selon l'une quelconque des revendications 1 ou 2, **caractérisée en ce qu'**elle comprend un dispositif régulateur (10) adapté pour réguler l'énergie électrique produite.

4. Installation (1) de production de neige de culture selon l'une quelconque des revendications 1 à 3, **caractérisée en ce que** lesdits moyens de commande (5) comprennent au moins un capteur (11) de paramètre(s) choisi(s) parmi les capteurs de vitesse du vent (114), de pression d'eau (112), de pression d'air (111), de température ambiante et d'hygrométrie ambiante (113), lequel au moins un capteur de paramètre(s) (11) est alimenté par de l'énergie électrique produite par ladite génératrice d'électricité (6).

5. Installation (1) de production de neige de culture selon l'une quelconque des revendications 1 à 4, **caractérisée en ce que** ladite génératrice d'électricité (6) comprend une entrée de fluide (65) pour le fluide d'entrainement de ladite turbine (61), au moins une sortie de fluide (66, 66a) pour le fluide d'entrainement de ladite turbine (61), un canal de transport dudit fluide (67) reliant ladite entrée de fluide (65) et ladite au moins une sortie de fluide (66, 66a), au sein d'un tronçon duquel canal de transport de fluide (67) est disposé un secteur (S, Sa) de ladite turbine (61), pour permettre son entrainement en rotation,
lequel canal de transport de fluide (67) comprend un moyen (69) de restriction de passage pour ledit fluide, ménagé en amont de ladite turbine (61), pour augmenter la vitesse dudit fluide dans ledit canal de transport (67).

6. Installation (1) de production de neige de culture selon l'une quelconque des revendications 1 à 5, **caractérisée en ce que** ladite génératrice d'électricité (6) comprend une entrée de fluide (65) pour le fluide d'entrainement de ladite turbine (61), au moins une sortie de fluide (66, 66a) pour le fluide d'entrainement de ladite turbine (6), un canal de transport dudit fluide (67) reliant ladite entrée de fluide (65) et ladite au moins une sortie de fluide (66, 66a), au sein d'un tronçon duquel canal de transport de fluide (67) est disposé un secteur (S, Sa) de ladite turbine (6, 6'), pour permettre son entrainement en rotation,
lequel canal de transport de fluide (67) comprend un moyen (68) de restriction de passage pour ledit fluide, ménagé en aval de ladite turbine (61), pour limiter la vitesse du fluide dans le canal de transport de fluide (67) de la génératrice d'électricité (6).

7. Installation (1) de production de neige de culture selon l'une quelconque des revendications 1 à 6, **caractérisée en ce que** ladite génératrice d'électricité (6) comprend une entrée de fluide (65) pour le fluide d'entrainement de ladite turbine (61), au moins une sortie (66, 66a) de fluide pour le fluide d'entrainement de ladite turbine (61), un canal de transport dudit fluide (67) reliant ladite entrée de fluide (65) et ladite au moins une sortie de fluide (66, 66a), au sein d'un tronçon duquel canal de transport de fluide (67) est disposé un secteur (S, Sa) de ladite turbine (61), pour permettre son entrainement en rotation,
laquelle installation (1) comprend en outre une canalisation « by-pass » (70) qui raccorde ladite entrée de fluide (65) et ladite au moins une sortie de fluide (66, 66a), laquelle canalisation « by-pass » (70) permet le passage d'une partie dudit fluide pour l'alimentation dudit dispositif enneigeur (2) sans transiter par ladite génératrice d'électricité (6).

8. Installation (1) de production de neige de culture selon l'une quelconque des revendications 1 à 7, **caractérisée en ce que** ladite génératrice d'électricité (6) comprend une entrée (65) pour le fluide d'entrainement de ladite turbine (6), deux sorties (66 et 66a) pour le fluide d'entrainement de ladite turbine (6), un canal de transport dudit fluide (67) reliant ladite entrée de fluide (65) et lesdites deux sorties de fluide (66, 66a),
une première desdites sorties pour ledit fluide (66) étant ménagée de sorte qu'un premier secteur (S) de ladite turbine d'électricité (6) soit disposé au sein d'un tronçon dudit canal de transport (67), et
une seconde desdites sorties pour ledit fluide (66a) étant ménagée de sorte qu'un second secteur (Sa) de ladite turbine d'électricité (6) soit disposé au sein d'un tronçon dudit canal de transport (67),
lesquels premier secteur de turbine (S) et second secteur de turbine (Sa) s'étendent sur des secteurs angulaires de valeurs différentes pour disposer d'un choix de raccordement notamment en fonction des caractéristiques de pression et de débit du fluide en amont de ladite génératrice d'électricité (6),
l'installation (1) comprenant encore un moyen d'obturation (66b) adapté pour obturer ladite première sortie (66), ou ladite seconde sortie (66a), non utilisée pour le raccordement.

## Patentansprüche

1. Anlage (1) zur Produktion von Kunstschnee mit - einer Beschneiungsvorrichtung (2), - einer Kanalisation für fließendes Wasser (3) zur Versorgung der Beschneiungsvorrichtung (2) mit Wasser, - einer Kanalisation für einen Luftfluß (4) zum Versorgen der Beschneiungsvorrichtung (2) mit Luft, - Steuerungsmitteln (5) zum Steuern des Betriebs der Beschneiungsvorrichtung (2), - einer Stromversorgung für die Versorgung der Steuerungsmittel (5) mit Strom,
wobei die Stromversorgung einen Stromgenerator (6) aufweist, der auf der Kanalisation für einen Luftfluß (4) angeordnet ist,
wobei der Stromgenerator (6) eine Turbine (61) aufweist, die geeignet ist, durch die Luft der Kanalisation für einen Luftfluß (4) angetrieben zu werden,
**dadurch gekennzeichnet, daß** sie zwei Kondensatabflußsysteme (14, 15) aufweist, von denen eins (14) stromaufwärts und das andere (15) stromabwärts vom Stromgenerator (6) angeordnet ist und die beide dazu ausgelegt sind, das Ansammeln von Wasser im Stromgenerator (6) zu begrenzen.

2. Anlage (1) zur Produktion von Kunstschnee gemäß Anspruch 1, **dadurch gekennzeichnet, daß** sie einen Wechselstromgenerator, der mit der Achse der Turbine für die Stromerzeugung in Eingriff ist, und Mittel zum Speichern der erzeugten elektrischen Energie vom Typ einer Batterie oder Batterien oder mit dem Wechselstromgenerator verbundenen Superkapazität(en) . aufweist.

3. Anlage (1) zur Produktion von Kunstschnee gemäß einem der Ansprüche 1 oder 2, **dadurch gekennzeichnet, daß** sie eine Reglervorrichtung (10) aufweist, die geeignet ist, die erzeugte elektrische Energie zu regeln.

4. Anlage (1) zur Produktion von Kunstschnee gemäß einem der Ansprüche 1 bis 3, **dadurch gekennzeichnet, daß** die Steuerungsmittel (5) mindestens einen Sensor (11) für einen (oder mehrere) Parameter aufweisen, der (die) unter den Windgeschwindigkeitssensoren (114), den Wasserdrucksensoren (112), den Luftdrucksensoren (111), den Umgebungstemperatur- und Umgebungsfeuchtigkeitssensoren (113) ausgewählt ist (sind), wobei der mindestens eine Parametersensor (11) durch die vom Stromgenerator (6) erzeugte elektrische Energie versorgt wird.

5. Anlage (1) zur Produktion von Kunstschnee gemäß einem der Ansprüche 1 bis 4, **dadurch gekennzeichnet, daß** der Stromgenerator (6) einen Flüssigkeitseingang (65) für die Antriebsflüssigkeit der Turbine (61), mindestens einen Flüssigkeitsausgang (66, 66a) für die Antriebsflüssigkeit der Turbine (61), einen Transportkanal (67) für die Flüssigkeit, der den Flüssigkeitseingang (65) mit dem mindestens einen Flüssigkeitsausgang (66, 66a) verbindet, aufweist, wobei in einem Abschnitt des Transportkanals (67) für die Flüssigkeit ein Sektor (S, Sa) der Turbine (61) liegt, um deren Drehantrieb zu ermöglichen,
wobei der Transportkanal (67) für die Flüssigkeit ein Mittel (69) zum Begrenzen des Durchflusses für die Flüssigkeit aufweist, das stromaufwärts von der Turbine (61) angeordnet ist, um die Geschwindigkeit der Flüssigkeit im Transportkanal (67) zu erhöhen.

6. Anlage (1) zur Produktion von Kunstschnee gemäß einem der Ansprüche 1 bis 5, **dadurch gekennzeichnet, daß** der Stromgenerator (6) einen Flüssigkeitseingang (65) für die Antriebsflüssigkeit der Turbine (61), mindestens einen Flüssigkeitsausgang (66, 66a) für die Antriebsflüssigkeit der Turbine (6), einen Transportkanal (67) für die Flüssigkeit, der den Flüssigkeitseingang (65) mit dem mindestens einen Flüssigkeitsausgang (66, 66a) verbindet, aufweist, wobei in einem Abschnitt des Transportkanals (67) für die Flüssigkeit ein Sektor (S, Sa) der Turbine (6, 6') liegt, um deren Drehantrieb zu ermöglichen,
wobei der Transportkanal (67) für die Flüssigkeit ein Mittel (68) zum Begrenzen des Durchflusses für die Flüssigkeit aufweist, das stromabwärts von der Turbine (61) angeordnet ist, um die Geschwindigkeit der Flüssigkeit im Transportkanal (67) des Stromgenerators (6) zu begrenzen.

7. Anlage (1) zur Produktion von Kunstschnee gemäß einem der Ansprüche 1 bis 6, **dadurch gekennzeichnet, daß** der Stromgenerator (6) einen Flüssigkeitseingang (65) für die Antriebsflüssigkeit der Turbine (61), mindestens einen Flüssigkeitsausgang (66, 66a) für die Antriebsflüssigkeit der Turbine (61), einen Transportkanal (67) für die Flüssigkeit, der den Flüssigkeitseingang (65) mit dem mindestens einen Flüssigkeitsausgang (66, 66a) verbindet, aufweist, wobei in einem Abschnitt des Transportkanals (67) für die Flüssigkeit ein Sektor (S, Sa) der Turbine (61) liegt, um deren Drehantrieb zu ermöglichen,
wobei die Anlage (1) außerdem einen Kanalisationsbypass (70) aufweist, der den Flüssigkeitseingang (65) mit dem mindestens einen Flüssigkeitsausgang (66, 66a) verbindet, wobei der Kanalisationsbypass (70) den Durchfluß eines Teils der Flüssigkeit für die Versorgung der Beschneiungsvorrichtung (2) ermöglicht, ohne durch den Stromgenerator (6) zu fließen.

8. Anlage (1) zur Produktion von Kunstschnee gemäß einem der Ansprüche 1 bis 7, **dadurch gekennzeichnet, daß** der Stromgenerator (6) einen Eingang (65) für die Antriebsflüssigkeit der Turbine (6), zwei Ausgänge (66 und 66a) für die Antriebsflüssigkeit der Turbine (6), einen Transportkanal (67), der den Flüssigkeitseingang (65) mit den beiden Flüssigkeitsausgängen (66, 66a) verbindet, aufweist,
wobei ein erster der Ausgänge (66) für die Flüssigkeit so angeordnet ist, daß ein erster Sektor (S) der Stromturbine (6) in einem Abschnitt des Transportkanals (67) liegt, und
wobei ein zweiter der Ausgänge (66a) für die Flüssigkeit so angeordnet ist, daß ein zweiter Sektor (Sa) der Stromturbine (6) in einem Abschnitt des Transportkanals (67) liegt,
wobei sich der erste Turbinensektor (S) und der zweite Turbinensektor (Sa) über Winkelbereiche mit unterschiedlichen Werten erstrecken, um über eine Auswahl der Anschlüsse, insbesondere in Abhängigkeit von den Merkmalen Druck und Flüssigkeitsdurchsatz stromaufwärts vom Stromgenerator (6), zu verfügen,
wobei die Anlage (1) außerdem ein Verschlußmittel (66b) aufweist, das geeignet ist, den für den Anschluß nicht gebrauchten ersten Ausgang (66) oder zweiten Ausgang (66a) zu verschließen.

## Claims

1. Artificial snow-making facility (1) comprising - a snow-making device (2), - a fluidic water pipe (3) for supplying water to said snow-making device (2), - a fluidic air pipe (4) for supplying air to said snow-making device (2), - control means (5) for managing the operation of said snow-making device (2), - a power supply for supplying electricity to said control means (5),
wherein said power supply comprises a power generator (6) arranged on said fluidic air pipe (4),
said power generator (6) comprising a turbine (61) adapted to be driven by the air of said fluidic air pipe (4),
**characterized in that**
it comprises two condensate draining systems (14, 15) placed upstream (14) and downstream (15) from the power generator (6), adapted to limit the accumulation of water in said power generator (6).

2. Artificial snow-making facility (1) according to claim 1, wherein the axis of said turbine (61, 61') is meshed with an alternator for the production of electricity, said alternator being connected to means for storing the electrical energy produced, such as batteries or super-capacitors.

3. Artificial snow-making facility (1) according to any one of claims 1 or 2, **characterized in that** it comprises a regulator device (10) adapted to regulate the electrical energy produced.

4. Artificial snow-making facility (1) according to any one of claims 1 to 3, **characterized in that** said control means (5) comprise at least one sensor (11) of parameter(s) chosen among wind speed (114), water pressure (112), air pressure (111), ambient temperature and ambient humidity sensors (113), said at least one parameter sensor being supplied with electrical energy produced by said power generator (6).

5. Artificial snow-making facility (1) according to any one of claims 1 to 4, wherein said power generator (6) comprises a fluid inlet (65) for the driving fluid of said turbine (61), at least one fluid outlet (66, 66a) for the driving fluid of said turbine (61), a transport canal (67) for said fluid, connecting said fluid inlet (65) and said at least one fluid outlet (66, 66a), within a section of which fluid transport canal (67) is arranged a sector (S, Sa) of said turbine (61), to allow the rotational driving thereof,
said fluid transport canal (67) comprising a passage restriction means (69) for said fluid, arranged upstream from said turbine (61), to increase the speed of said fluid in said fluid transport canal (67).

6. Artificial snow-making facility (1) according to any one of claims 1 to 5, wherein said power generator (6) comprises a fluid inlet (65) for the driving fluid of said turbine (61), at least one fluid outlet (66, 66a) for the driving fluid of said turbine (6), a transport canal (67) for said fluid, connecting said fluid inlet (65) and said at least one fluid outlet (66, 66a), within a section of which fluid transport canal (67) is arranged a sector (S, Sa) of said turbine (6), to allow the rotational driving thereof,
said fluid transport canal (67) comprising a passage restriction means (68) for said fluid, arranged downstream from said turbine (61), to limit the speed of the fluid in the fluid transport canal (67) of the power generator (6).

7. Artificial snow-making facility (1) according to any one of claims 1 to 6, wherein said power generator (6) comprises a fluid inlet (65) for the driving fluid of said turbine (61), at least one fluid outlet (66, 66a) for the driving fluid of said turbine (61), a transport canal (67) for said fluid, connecting said fluid inlet (65) and said at least one fluid outlet (66, 66a), within a section of which fluid transport canal (67) is arranged a sector (S, Sa) of said turbine (61), to allow the rotational driving thereof,
the facility (1) further comprising a "by-pass" pipe (70) that connects said fluid inlet (65) to said at least one fluid outlet (66, 66a), said "by-pass" pipe (70) allowing the passage of a part of said fluid for supplying said snow-making device (2) without transiting by said power generator (6).

8. Artificial snow-making facility (1) according to any one of claims 1 to 7, wherein said power generator (6) comprises an inlet (65) for the driving fluid of said turbine (6), two outlets (66 and 66a) for the driving fluid of said turbine (6), a transport canal (67) for said fluid, connecting said fluid inlet (65) and said two fluid outlets (66, 66a), a first one of said outlets (66) for said fluid being arranged in such a way that a first sector (S) of said electricity turbine (6) is arranged within a section of said transport canal (67), and
a second one of said outlets (66a) for said fluid being arranged in such a way that a second sector (Sa) of said electricity turbine (6) is arranged within a section of said transport canal (67),
said first turbine sector (S) and second turbine sector (Sa) extending over angular sectors of different values to offer a choice of connection in particular as a function of the fluid pressure and flow rate characteristics upstream from said power generator (6),
the facility (1) also comprising a closing means (66b) adapted to close said first outlet (66), or said second outlet (66a), not used for the connection.
